# EUROPEAN PATENT APPLICATION

(11) **EP 3 939 858 A2**
(43) Date of publication of application: **19.01.2022**
(21) Application number: 21184442.8
(22) Date of filing: 08.07.2021
(51) Int. Cl.: B61L 25/02, B61L 27/00

(54) **TRAIN ROUTE MAPPING METHOD**

(30) Priority: 14.07.2020 GB 202010819
(71) Applicant: Siemens Mobility Limited, London, NW1 1AD (GB)
(72) Inventor: Hesford, Jack, Chippenham, SN15 1GG (GB)
(74) Representative: Deffner, Rolf

(57) **Abstract**

Methods and apparatus for determining the location of a train along an expected route.

## Description

On-board train control systems, for example systems known as European Train Control System (ETCS) and Communications-Based Train Control (CBTC), require estimates of train position between points of absolute certainty of position.

Such systems typically include a control centre that manages which trains can have occupancy on which tracks, and at what time. The control centre typically does not itself calculate the location of each train under its control, but rather receives this information over a wireless network from each train. Typically, each train calculates its own position from on-board equipment and data derived from trackside equipment it interfaces with and reports the resultant calculated position to the control centre.

When calculating a current position based on data derived from external trackside infrastructure, positional inaccuracies can accumulate. For example, absolute position modules (balise groups) may be provided on or beside the track. When a train passes over, or alongside, a group of these modules, the train receives an update of its position and direction of travel. As the balises are static, the train's precise current position is thereby known. The known precise current position may be sent to the control centre via a wireless network.

Between the balise groups the train uses on-board sensors to estimate its position based on distance travelled from the precise position of last trackside module. Such estimation is usually done by measuring distance travelled along the track, for example using a wheel rotation counter. Due to sensor and/or environmental factors a distance error build up can occur as the train calculates its changing position. That distance error can only be fully resolved to zero when the train travels over or beside the next trackside module of static balises. Error build up may result, for example, from wheel diameters changing due to wear and temperature, and wheel slip in low-adhesion areas.

An issue that arises from the positional error build up is that the train control centre can only manage trains efficiently and effectively if it has precise current locations of the trains that it controls. Where the positions of controlled trains are not known precisely, the distance between controlled trains must be increased in order to provide a safe braking distance to stop to avoid impact with a train travelling in front.

Typically, trains operating in ETCS and similar metro-style systems calculate the distance travelled from the previous trackside absolute position module either by calculating the speed of the train, for example using GPS data; and/or by counting a number of wheel rotations and therefore distance travelled. Typically, no further redundancy is provided to reduce positional error build up.

The absolute position modules comprising groups of balises typically have a defined maximum distance from each other, itself to limit build-up of positional uncertainty of trains using such balises to derive position information. This creates a trade-off between having few absolute position modules with attendant low installation and maintenance costs or having many absolute position modules meaning high positional certainty, but high installation and maintenance costs.

Increasing train position certainty, which might be achieved conventionally by providing many absolute position modules of balises, allows the train control centre to operate trains closer together ("reduce headways") whilst still maintaining a safe stopping distance between trains. If headways are reduced, the total number of trains that can traverse a track in a given period of time ("line capacity") can be increased.

Some conventional methods to increase the accuracy of determining a train's location include installing more trackside absolute position modules located closer together, or to provide more precise and expensive position detection systems on board the trains.

Known train odometry systems may comprise multiple tachometers and speed radars for reliability. Distance travelled and train speed may be derived from such tachometers and radars, which allow an on-board system to calculate the train's position on the track; however, conventional such systems have errors of up to ±(5m+5%) of the distance from the previous absolute position module (balise group) that the train has passed over or alongside.

Typically, balise groups comprise two or more balises; meaning if a single balise is missed or incorrectly read, there could still be other balise(s) to give the train its position, direction and track orientation. The train may have a planned route stored on-board, listing balises that it expects to travel over or alongside.

Spacings between balise groups are calculated so as to balance the distance error build up and positional uncertainty versus module costs, installation costs, and maintainance costs of the absolute position modules. Reduction in maintenance requirements also leads to a safer railway as maintenance staff will be required to spend less time trackside. The closer balise groups are to each other, the smaller the distance error that can accumulate between balise groups, but also the greater the cost to install and maintain. Therefore, a solution where spacing between balise groups can be increased without sacrificing positional accuracy, whilst also being implemented for less cost would be beneficial.

It is therefore desirable to implement a system which can increase train position certainty without increasing the amount of trackside infrastructure; or alternatively to maintain the same positional certainty whilst reducing trackside infrastructure. Such a system would ideally be retrofittable to existing rolling stock and may provide a more diverse array of position-calculating systems to give a greater accuracy and redundancy in a system for locating trains.

CN108981692-A LANZHOU CHENYANG QICHUANG INFORMATION TECHNOLOGY CO., LTD. Describes an inertial navigation/visual odometer-based train positioning method which involves collecting track-side images by processing images of kilometre posts, to determine motion information of current train. This document proposes to improve train positioning systems by fusing the on-board navigation equipment, e.g. tachometer and Doppler radar, with a visual positioning system. The visual system proposed uses images such as distance marker boards, to calculate the train's position and distance along the route. A stream of high-quality video must be processed in real time, and the data must be evaluated to find points of interest in the image that must be recognised with absolute certainty to be a specific location. As this system relies on matching or reading trackside signs or geographical features, a database must be built up of potential targets and then stored either locally on the train or externally within a control centre; requiring either high processing speeds or high upload and download network speeds. The speeds to achieve this may not be available on the GSM-R radio network currently installed in the UK, and equivalent systems in other countries. The images collected would have to be from a high-resolution camera that could also function at night and under low visibility.

The present invention accordingly provides methods and/or apparatus as defined in the appended claims.

The above, and further, objects, characteristics and advantages of the present invention will become more apparent in the following description of certain embodiments, given by way of examples only, in conjunction with the appended drawings, wherein:
Fig. 1 shows an example system layout;
Fig. 2 schematically represents on-board equipment on a train, as relevant to the present invention; and
Fig. 3 shows an example system architecture.

In embodiments of the present invention, a train's route profile is mapped by data output from a variety of sensors.

Some of the sensors will provide a direct indication of the train's position by indicating a distance travelled along the track since passing a known location, such as a most recent balise. Such sensors may include a GPS receiver, wheel rotation counter and similar devices to measure actual progress of the train along a track.

Other sensors provide indications of characteristics of the track at a current location of the train. Examples of measurements that may be taken by such sensors, the sensors being conventional in themselves, include:
- Bearing, being the direction of travel in terms of compass bearing or heading, as may be determined from a compass and/or accelerometer movements.
- Cant, being the rotation of the train in a plane perpendicular to the direction of travel, as may be determined from accelerometer movements from a known position.
- Gradient, being the inclination of the track over which the train is passing, represented by the rotation of the train in a vertical plane aligned with the direction of travel, as may be determined from accelerometer movements from a known position.

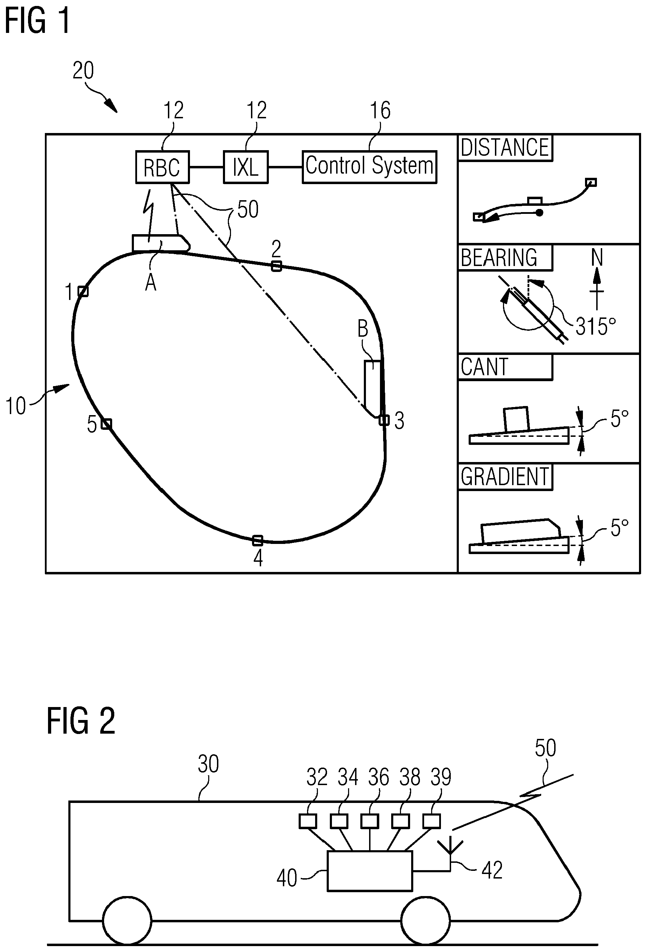

On the right-hand side of Fig. 1, simple drawings are provided to illustrate the meaning of these terms.

Other sensors may be provided on board a train to provide measurements of location-dependent characteristics, some of which may be time variant.

In certain embodiments of the present invention, these quantities are measured at points along a train's route, and the measurements stored as a data map on board the train or within a central remote train control system. In this way, the data map may be updated and maintained by repeated measurements taken at each point along a track.

In embodiments of the present invention, the central remote train control system includes a data map as described, as well as a machine learning device, which applies machine learning algorithms to data stored in the data map, and data newly provided by the sensors on the train, to provide more accurate and timely data. In certain examples, time-variant data such as weather reports, rail temperature and so on may be used by such machine learning device to calculate a time-variant value of "expected" sensor data. The "expected" sensor data may then be compared to "current" sensor data transmitted by the train to provide a more precise and more reliable indication of the location of a train.

Fig. 1 shows an example system layout of an embodiment of the present invention. Trains A and B are travelling a closed loop route 10, passing points 1, 2, 3, 4, 5, each of which points is provided with an absolute position module comprising one or more balise(s). The example of Fig. 1 shows a basic example of a track layout 10 with a connected train control centre 20, itself comprising a radio block centre RBC 12, an interlocking system IXL 14 and control system 16. The control system 16 may itself contain a database and a machine learning device as described above. In an ETCS system a radio block centre RBC 12 is the hardware used to communicate to trains A, B over a wireless network such as a GSM-R system. It manages movement authorities and encryption. Absolute position modules 1, 2, 3, 4, 5 comprise balise groups that each train A, B will traverse over or alongside.

Fig. 2 schematically represents a train 30, carrying sensors 32, 34, 36, 38 for measuring Distance, Bearing, Cant and Gradient, respectively, and supplying data representing the corresponding measurements to an on-board system 40, which is in communication with the train control centre 20 over a wireless communication channel 50 such as a GSM-R connection, using antenna 42. As discussed above, the train may be provided with further sensors to measure location-dependent characteristics, which may also be time-dependent. For example, a proximity sensor, such as a doppler radar 39, conventional in itself, may also be provided, in communication with the on-board system for detecting obstructions ahead of the train and may be used to calculate the speed of the train, hence providing a measure of Distance. Alternatively, the doppler radar 39 may simply provide proximity measurement data to the central remote train control system.

Once the remote central controller 20 has calculated an estimated position of the train, the remote central controller 20 may send instructions or warnings to trains to indicate future track conditions, or command the train to brake, speed up, stop etc.

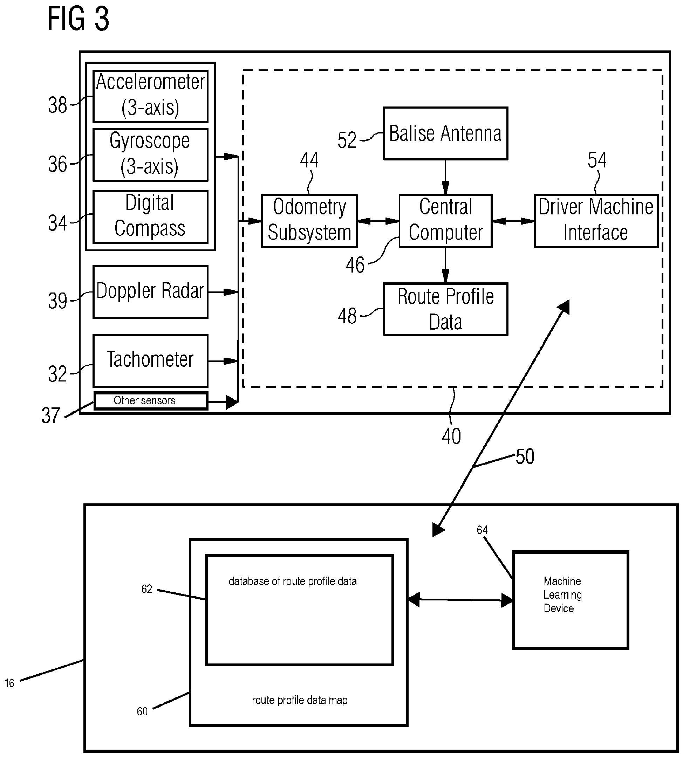

Fig. 3 shows more detail of an example embodiment of the present invention. On-board system 40, in this example embodiment, comprises an odometry subsystem 44 which receives data input from sensors 32-39, , and either uses sensor data with an on-board route profile data map to calculate a current train position for sending to the train control centre 20, or formats corresponding sensor data for transmission to the train control centre 20 for comparison with a route profile data map stored in database 62, provided within the train control centre 60. Database 62, provided within the train control centre 60, contains data from sensors provided on trains, representing corresponding measurements at corresponding track locations.

As illustrated, and in preferred embodiments, sensors 32-39 may comprise accelerometers 38, gyroscope 36, digital compass 34, doppler radar 34, tachometer 32; or equivalents to any of these. Other sensors 37 may also be provided, to measure other location-dependent characteristics, some of which may be time-variant.

The odometry subsystem 44 communicates with a central computer 46 within the on-board system 40. The central computer 46 has access to route profile data 48 where such data is stored in the on-board system 40, and to a balise antenna 52 which receives data from trackside balises 1, 2, 3, 4, 5 as the train passes them, to provide accurate location information when available. A driver-machine interface 54 is provided, to allow a user, typically the driver of the train, to exercise a level of control over the on-board system. Alternatively, the train may not be provided with route profile data stored on board the train; but may access route profile data stored in database 62, provided within the train control centre 60.

At any point along the train's route 10, on-board sensors 32-39 may detect the train's present position and orientation in Distance, Bearing, Cant and Gradient, along with other location-dependent characteristics, which may be time dependent. By comparing such route profile data representing the sensed values of these parameters to stored measurements in a data map for the route, an indication of the train's present position along the route 10 may be derived by matching the sensed values to the stored measurements. The stored measurements may be stored in the on-board system 40, aboard the train, or in the train control centre 20, remote from the train. Typically, but not necessarily, the comparing and matching is performed in the same location that the stored route profile data measurements are located: within on-board system 40 or within train control centre 20.

Referring back to Fig. 1, train B, is passing absolute position module 3 comprising one or more balise(s). The position of train B is therefore precisely known and may be used to check or calibrate the route profile data comparison calculations provided by the present invention.

Train A is at a location between absolute position module 1, and absolute position module 2. The position of train A is therefore not precisely known. Sensors on board the train measure Distance, Bearing, Cant and Gradient etc. in real time. The measure of Distance is taken as distance travelled since the train passed a precisely known position: in the illustrated example, distance travelled since the train passed absolute position module 1.

The stored measurements of Distance, Bearing, Cant and Gradient etc. along the route provide a route profile data map of the route 10, which can then be compared in real time with current data collected by sensors aboard the train traversing the mapped route 10. By comparing current data of Distance, Bearing, Cant and Gradient etc. with data in the data map, a current position of the train may be calculated by on-board system 40 and reported back to the train control centre 20; or the current route profile data from the sensors may be reported back to the control centre 20 which performs calculation of the current position of the train using the current data from the sensors.

In certain embodiments of the present invention, the control centre 16 performs calculations to match the route profile data the train is currently experiencing with the data stored within its database 62. The control centre 16 stores data it receives from each train and route to add to its database 62. The database may include train identifiers, route profile data, date, time, weather data, as well as data to capture the differences between the expected positions and the exact known positions at absolute position modules such as represented at 1, 2, 3, 4, 5.

According to certain embodiments of the present invention, the control centre 16 is provided with a machine learning device 64, arranged to operate on new and existing data in the database to output a route data profile which accurately depicts what each train should experience, as indicated by its on-board sensors and given its current environment; thus increasing the positional certainty. Over time, as more trains feed the database with environmental and route profile data from sensors carried onboard, machine learning can more accurately deduce the location along the route profile that its current data relates to, thereby indicating a current position of the train. The more trains are involved, and the more data collected, the greater the accuracy of the calculated location may be, as the extent of information which can be employed by the machine learning device 64 will increase.

With regard to the situation represented in Fig. 1, since precise notifications of the train's position are provided by absolute position modules 1, 2, 3, 4, 5, comparison of the current Distance, Bearing, Cant and Gradient etc. should only need to be carried out with respect to that part of the data map representing the route 10 between a previous absolute position module 1 and a next absolute position module 2.

If no match is found between current sensor data provided by the train and data stored in that part of the data map representing that part of the route 10, the comparison of the current sensor data may be expanded to other parts of the route. Since this represents an unexpected situation, an alarm or alert may be activated, within the train and/or within the train control centre 20. The comparison may be carried out on board the train, if at least the relevant part of the data map is available to on-board systems 40; or the train may simply report current data of Distance, Bearing, Cant and Gradient etc. to train control centre 20 over the wireless communication channel 50, and systems within train control centre 20 may perform the comparison to deduce the likely location of the train.

Once the remote central controller 20 has estimated the current location of a train, the remote central controller 20 may send instructions or warnings to the train: for example, to indicate future track conditions, or command the train to brake, speed up, stop etc.

According to embodiments of the present invention, certain parts are added to a train control system, if not already present, in order to implement the present invention and gain the benefits of improving the precision of determination of a train's position. Those parts include:
- A digital compass, or equivalent, as sensor 34, providing bearing (direction) data into the on-board system 40 of the train 30.
- Sensors: multi-axis digital accelerometers 38 that can sense acceleration and roll in the X, Y and Z axes, to provide data for determining bearing, cant and gradient; as well as a digital gyroscope 36 which can sense movement in each of these axes. These will be connected to the on-board system 40 of the train. Further sensors may be provided, as described elsewhere, to measure location dependent factors experienced by the train; such location dependent factors may also be time dependent. Examples of suitable sensors which may be provided are discussed below, but may include sensors of GPS, temperature, light, humidity, vibration, air pressure, magnetic field variation, ultrasound or radar proximity detectors,
- An on-board computational system 40 that can compare stored route profile data, accumulated during earlier passages by the same train or different train(s), with real-time collected data from the sensors. Preferably, the on-board system 40 also receives data from balises at absolute position modules 1, 2, 3, 4, 5 to provide accurate position updates when available.
- Route profile data for the planned route 10, and any peripheral routes which the train could take if it deviates from the planned route 10 for any reason. The data will include route profile mapping data calculated from the database 62 in the control centre 16; namely Distance, Bearing, Cant and Gradient. This route profile data may be stored temporarily on-board the train, in its on-board system 40 for example, and/or stored permanently in the train control centre 20.

Application of the present invention will provide each train A, B, and the train control centre 20, with greater positional certainty of the train due to almost continuous access to accurate data representing the present position of each train, multidirectional movement of each respective train; and measurements of other location dependent characteristics or, at least, as much of such data as the train control centre 20 requires.

As the present invention provides near-continuous, or at least regularly updated, position data for each train, it may be found that spacing between absolute position modules 1-5 (balise groups) can be increased, and each balise group may be reduced to a single balise, since the detrimental effect of missing a balise group is offset by the improved train location made possible by the data mapping of the present invention. Such reduction in trackside infrastructure will reduce installation and maintenance costs, and the attendant reduction in ongoing maintenance requirement will improve the safety of the railway, as there will be less need for maintenance staff to perform trackside operations. Some embodiments will enable a further reduction in trackside infrastructure by providing virtual position reference points, which may perform the functions of some or all of the conventional trackside balises.

Fig. 3 shows a generic example of how an example architecture of a system according to the present invention could be structured. From an overall system view, the present invention could operate in one of the following two distinct ways, although other arrangements are possible, within the scope of the present invention: In a first example, each train can either hold a copy of the full database 62 of an entire railway network, or a specific section 10 of track and can continuously cross reference the actual route profile and other detected conditions as detected by the train's sensors 32-39 against the route profile data map stored in the on-board system 40. While such an arrangement would provide the most comprehensive coverage of data mapping, due to direct access to the route profile data map and so would provide the lowest distance error build ups, it also would require the largest amount of on-board data processing, and so may increase the cost of the on-board system 40 of each train.

In a second example, the train control centre 20 holds the full route profile data map in database 62, as is also the case with the previously-described first example embodiment above. However, the route data map is not stored on the train in this example. Rather, the train sends data provided by the various sensors to the train control centre 20 for interpretation. The train control centre 20 compares data received from the train to the stored full route profile data map stored in database 62 and thereby deduces a current location of the train. This deduced location may be used to appropriately control the train, such as by issuing commands to the train or to a train driver.

The train control centre 20 may request a current route profile dataset, representing current sensor output values, from a train at specific intervals, or when the control centre estimates that the train has reached a certain location.

For example, in a congested area with lots of trains the control centre 20 would need to know the location of each train more accurately, and therefore would request measured data more frequently than if there was little traffic or very large headways. The requests from the control centre 20 may be issued at determined time intervals, to allow the control centre 20 to monitor the movement of the train; or the requests may be issued by the control centre 20 at times that the control centre estimates that the train will be passing a certain location. By requesting information to confirm that the train is at a predetermined location, that location becomes a virtual position reference point, and may be used much as conventional absolute position modules 1, 2, 3, 4, 5. The control centre 20 is accordingly informed that a train is at a certain location; the measured location profile data from the train then essentially serves just to confirm the location predicted by the train control centre. If the location profile data received from the train does not correspond to the expected location, an alarm or alert may be raised, and the control centre may compare the received location profile data to route profile data of the wider network in an attempt to locate the train.

The present invention accordingly introduces the notion of a virtual positional reference point between trackside balise groups 1, 2, 3, 4, 5 that could be used to reduce the build-up of distance error between balise groups. Such an arrangement may provide coverage at unequal distance intervals, the intervals being determined by how much locational certainty the train control centre requires at specific points along the route 10. Such a solution would require a lot less data processing than in an embodiment in which sensor data is continuously evaluated and less data storage and processing in the on-board system 40 of the train, meaning that the on-board system 40 on each train may be less costly.

In another example, rather than requesting immediate sensor data when the control centre 20 estimates that a train is at a predefined location or range of locations, the control centre sends a set of data which would be expected to be detected by the train's on-board sensors when the train arrives at a point further along the track, which is a virtual position reference point. The train will then indicate back to the control centre when its sensors provide data corresponding to that provided by the control centre: meaning that the train has arrived at the virtual position reference point. A suitable degree of tolerance should be built in to the comparison, as the train's sensors are unlikely to generate the exact same data as provided by the control centre.

The train control centre may use such method to provide commands to the train, for example, instructing it to brake as it passes the virtual position reference point, or to stop at a location 3km after the virtual position reference point, for example.

On both examples above, through the introduction of a machine learning process on the control centre 20 database, the capturing of route data can serve two purposes, the first being to determine the location of the train, and the second being to improve the locational accuracy for future trains. By collecting data from many trains as they pass over the track, the data base 62 may be improved, and a more accurate data model of the track may be established.

For example, in Fig. 1, over time, multiple trains start from position 1 and pass position 2 with an average distance error built up over that distance of twenty metres, corresponding timing and location data are received at the control centre and stored in the database 62. The machine learning device 64 can operate on this data, and may, for example, average the twenty metres average distance error built up across the entire section of track for the next train so that once the train has passed absolute position module 1 its expected location is much closer to its actual location, for the section of track between absolute position module 1 and absolute position module 2. Database 62 preferably also holds information about the type of train which measured and sent each data entry and the current weather at the time that the sensor data was captured. The machine learning device 64 could therefore compare and modify the data map and the subsets of data which are sent to the train, thereby to improve the positional accuracy based on seasonal effects such as temperature changes (e.g., track expansion), and component errors intrinsic to specific train types or infrastructure, or a combination of both. For example, a sensor data set relating to the temperature of condition of the rail or of train wheels, captured in sunlight with an air temperature of 30°C will be expected to be noticeably different from corresponding sensor data captured at night in an air temperature of -5°C. The machine learning device may be arranged to compensate for these effects, and to send to the train data which has been adjusted to suit current time and weather conditions experienced by the train.

In certain embodiments, the central controller 20 can request current sensor data from a train at any time as required. The central controller 20 may simply prompt a train over communication channel 50 to send current sensor data. The central controller 20 may send data to a train over communication channel 50 representing a track point ahead of where the system estimates the train to be currently and may request the train to indicate to the central controller 20 when its sensors report corresponding data (or within a defined level of tolerance) to indicate that the train has arrived at the location corresponding to the sensor data sent by the control system 20. This sending of location-dependent data and the signalling back of an indication that the train has arrived at the indicated point is an example of a "virtual reference point". The virtual reference point corresponds to a known geographical location at which the train is expected to encounter local conditions which cause its sensors to provide data corresponding to the data signalled by the control system.

In alternate embodiments, the central controller can ask the train to provide sensor data, or the central controller can ask the train to calculate and transmit its current position.

The controller may change the location of the virtual reference points according to a defined algorithm, which may take into account factors such as route occupancy by other trains, weather, known incidents on the line.

The controller may signal different virtual reference points, or different numbers of reference points, to different trains.

The sensor data measured by sensors on the train, stored in the central controller and used to define "virtual reference points" may represent features of the track position: distance, heading, cant, gradient; and may also include sensors indicating local environmental factors experienced by the train. For example, an air pressure sensor may be provided onboard the train. This may be used to indicate a present altitude of the train but may also be used to indicate other local environmental characteristics: short term and abrupt changes in air temperature may be interpreted to indicate the train passing infrastructure: such as passing through tunnels; under bridges; alongside walls, and so on. Such changes in air pressure may be used as another indicator of a train location on a track. Similarly, a sudden change in air pressure reported by two trains as occurring at a same time may indicate that those trains passed one another at that point in time; this information may be used by the central control system 20 and by its machine learning device 64 to improve location estimates of the train, since it can determine, that at the relevant moment in time, two trains were at a same location. Air pressure sensors may be provided on opposite sides of the train, and their differential air pressure measurement - measuring the difference in air pressure on opposite sides of the train - may be used to indicate, for example, which side of the train passes nearest to a wall; on which side the train passed another train; effects of air currents such as side winds. The train may also be provided with sensors to measure air temperature and humidity.

The train may further be provided with sensors to measure features relating to the operation of the train: power output, wheel vibration, wheel noise, wheel temperature, local magnetic fields, as examples.

The train may be provided with vibration sensors. The central control system 20 and its machine learning device 64 may use measurements of vibrations experienced by the train to determine the need for maintenance of the train or the track: for example, certain vibration signatures may be identified and recognised by the machine learning device 64 as representing a need to repair or replace train wheels; or a need to repair to the track. Once such vibrations, indicating a certain characteristic of the track at a certain location, have been identified and associated with the relevant location in the database 62, using machine learning device 64 where available, then the characteristic vibrations caused by that section of track may be used as another identifying characteristic to help locate a train which reports detection of similar vibrations sometime later.

A difference in detected vibration caused by track condition as compared to an expected vibration may indicate a recently damaged or repaired track; or may indicate some surface contamination, such as leaves, ice or snow on the rails; or flooding. Such indicators of track conditions may not assist with locating the train but may provide the central controller with information which may be used to issue appropriate instructions to the train: if leaves, snow or flooding are indicated, for example, the train may be commanded to slow down. Similarly, information derived from sensor data as to track conditions may be used to modify commands to later trains which are due to pass on the affected section of track, or a section of track adjacent to the affected section of track. Once a defective piece of track is detected as having been repaired, the central control system 20 and its machine learning device 64 where provided will learn the new vibration signature of that part of the track from vibration data provided by trains running on that track.

Changes of measured characteristics due to weather, or due to wear of track or wheels can be measured, then analysed and future changes predicted by the central control centre. For such purposes, the train may be provided with sensors to measure characteristics representing weather (e.g. rain sensors, humidity, temperature); and/or age of train wheels; condition of track.

The train may detect a problem with the track, such as leaves / flood / debris, and may notify the central controller of the detected problem (rather than simply notifying the central controller of the sensor data).

A magnetic sensor may be used to measure a magnetic characteristic of the track. Fluctuation in detected magnetic signal may indicate rail joints, points mechanisms, or damage to the rails. Such fluctuations also provide data which may be used to locate a train; and changes in such magnetic signal may be used by the machine learning algorithm in the central controller to detect damage or deterioration to rails, which may in turn be used to schedule repair or maintenance operations.

A magnetic sensor would also detect other objects on the side of the railway or between the rails, such as: old or discarded section of track, trackside infrastructure, metal grates etc. Unexpected data indicating the presence of magnetic material may be identified by the central control system 20, an alert raised, and a maintenance visit may be scheduled to investigate.

An ultrasonic sensor or radar may be provided aboard a train and used to detect proximity of structures such as bridges, cuttings, tunnel walls, other trains, and may be used as further data useful in determining a location of the train. Use of data from such an ultrasonic sensor will resemble use of air pressure data, described above. Detection of fixed features may be used to locate the train, and to improve the data map held by the central controller. Detection of other trains may be used to improve the estimated location of both trains.

According to the present invention, use of such database 62 in a remote control centre, preferably in conjunction with a machine learning device 64, provides more precise calculation of train location, which may be more frequently updated than in conventional arrangements.

In an embodiment which may be useful when a train needs to stop in a "dead zone", that is, a location where the train is out of communication with the controller, the train may store on board a section of the model relevant to its current movement authority, defining a section of track that a train is permitted to use. By comparing this model to current sensor data, the train may be more accurately controlled: for example, being brought to a stop at a red signal, rather than over-running it, or stopping short. When a movement authority is sent to the train, the data representing the corresponding section of track may be sent with it, so that systems on board the train may calculate optimised driving within the authorised track section.

Advantages of the present invention may include one or more of the following.

The required number of absolute position modules comprising groups of balises can be reduced, as spacings between absolute position modules can be increased while maintaining a reliable method for determining a location of the train. In an extreme example, all trackside absolute position modules may be eliminated, with the train location method of the present invention relying solely on virtual position reference points as described above. This therefore reduces the amount of money spent on installing and maintaining trackside equipment and reduces the amount of time staff spend trackside on installations and maintenance of trackside equipment. This advantage is particularly gained in embodiments where the train's on-board system 40 has full route profile data that it can autonomously compare to the route profile it is experiencing, out of communication with the control centre if necessary. The train has greater positional accuracy in its location estimates between absolute position modules or virtual position reference points, so therefore the spacings between trackside absolute position modules can be increased without reduction in position estimation accuracy as compared to a conventional arrangement having a greater number of trackside absolute position modules.

The number of balises in each trackside group 1, 2, 3, 4, 5 can be reduced from two (or more) down to one in some cases, or eliminated entirely, depending on whether secondary or tertiary balises in the group are required for indication of direction of travel, or to transmit extra data to the train, and whether the train location system can rely entirely on virtual position reference points. Such advantage may be gained as a result of the train having on-board or remote systems as described that can determine the direction of travel of the train regardless of how many balises are present in a trackside group.

Train positional accuracy may be increased by implementation of the present invention, as explained above. The safe distance between trains travelling on a same track can therefore be reduced, due to the improved confidence in position data. This allows increased line capacity: a minimum permitted distance between trains is calculated from the braking distance of each train with added allowance for some error in the trains' calculated positions. By increasing the accuracy of the trains' position estimates and the confidence in those estimates, the added allowance can be reduced.

According to preferred embodiments of the present invention, a greater diversity of train positional data is provided, increasing system redundancy to mitigate train positional system errors or failure. This advantage comes from the additional position data provided by the added sensors, such as accelerometer; gyroscope; digital compass provided to the on-board system on the train.

Preferably, implementation of the present invention allows a train control system to be implemented to provide accurate train positioning data using less trackside infrastructure, which in turn means lower cost of installation and maintenance and lower risk of injury to staff carrying out these operations. Implementation of the present invention may enable train control systems of greater line capacity and improved train location detection accuracy.

The database 62 or route profile data, using machine learning device 64 may be used to improve a train's braking curve: the planned or controlled braking of a train, possibly to a stop. For example: if, due to errors in train positional estimates, trains are found to be overrunning signals or alternatively are found to be stopping short of their expected position, the database 62 could be corrected or re-interpreted by the machine learning device 64 to reduce the occurrence of such events. Such improvement may increase the quality of service provided by the trains; providing both energy savings and reducing the number of signals passed at danger (SPADs).

In certain embodiments, the present invention may be implemented over a route using a singular balise in each balise group 1, 2, 3, 4, 5.

## Claims

1. A method for deriving a location of a train; comprising:
- at a number of locations along a route (10), measuring location dependent characteristics using sensors on board respective trains;
storing the resultant location dependent data as location profile data in a central control system (20), thereby constructing a data map (60) of the route, comprising a database (62) of measured location dependent data;
- measuring current values of location dependent characteristics using sensors on board the train, thereby providing current location profile data;
- communicating the current location profile data to the central control system (20) which includes a data map (60) itself comprising the database (62) of measured location dependent data;
- comparing the current location profile data to the data map; and
- deriving a location of the train as corresponding to a location for which stored location profile data corresponds to the current location profile data.

2. A method according to claim 1 further comprising a computer implemented method applied to location dependent data stored in the database, to derive and update the data map (60).

3. A method according to any preceding claim, comprising the step of communicating (50) from the central control system (20) to the train, to request the train to send current location profile data to the central control system.

4. A method according to any preceding claim, comprising the step of communicating (50) from the central control system (20) to the train, commands to instruct the train to change speed or stop.

5. A method according to claim 1 or claim 2, comprising the step of communicating (50) from the central control system (20) to the train, a set of location profile data indicating values of the location dependent characteristics corresponding to a virtual position reference point, and indicating by an on-board system of the train to central control system (20) that current location profile data measured by sensors on board the train correspond to the location profile data the to request the train to send current location profile data to the central control system.

6. A method according to any preceding claim, wherein the train passes absolute position modules (1-5) at intervals, and that the train is provided with means (42) for deriving location information from the absolute position modules, such that the position of the train is known as it passes each absolute position module, and that one of the measured location dependent characteristics is distance from a most-recently passed absolute position module.

7. A method according to any preceding claim, wherein at least part of the data map is stored on an onboard system (40) on the train, and that the onboard system (40) receives measurement data from sensors (32-39), compares the measurement data to the data map in order to derive a current position of the train; and reports that derived current position to the remote control centre (20).

8. A method according to any preceding claim, wherein the measured location dependent characteristics include characteristics indicating weather, data representing such characteristic being reported to the central control system (20) for use in improving the data map, and for use in compensating past and/or current measurements of characteristics to account for variation due to changes in weather between respective measurements of the characteristics.

9. A method according to any preceding claim, wherein the measured location dependent characteristics include a characteristic indicating vibration, data representing such characteristic being reported to the central control system (20) for use in improving the data map.

10. A method according to claim 9, further comprising a step of interpreting an indicated vibration as indicating a worn wheel, or worn rail, and consequently central control system (20) indicating that a corresponding maintenance or repair operation is required.

11. A method according to any preceding claim, wherein the measured location dependent characteristics include a characteristic indicating proximity, data representing such characteristic being reported to the central control system (20) for use in indicating passage of the train past infrastructure, or past other trains for use in improving the data map.

12. A method according to any preceding claim, wherein the measured location dependent characteristics include a characteristic indicating proximity, data representing such characteristic being reported to the central control system (20) for use in indicating passage of the train past infrastructure, or past other trains for use in improving the data map.
